# NEUE EUROPÄISCHE PATENTSCHRIFT

(11) **EP 1 816 488 B2**
(45) Veröffentlichungstag und Bekanntmachung des Hinweises auf die Entscheidung über den Einspruch: **03.07.2013**
(45) Hinweis auf die Patenterteilung: 18.03.2009
(21) Anmeldenummer: 07001603.5
(22) Anmeldetag: 25.01.2007
(51) Int. Cl.: G01V 8/20, G01S 17/48

(54) **Optoelektronische Vorrichtung und Verfahren zu deren Betrieb**
Opto-electronic device and method for its operation
Dispositif optoélectronique et son procédé de fonctionnement

(30) Priorität: 07.02.2006 DE 102006005463
(43) Veröffentlichungstag der Anmeldung: 08.08.2007
(73) Patentinhaber: Leuze electronic GmbH + Co. KG, 73277 Owen/Teck (DE)
(72) Erfinder: Argast, Martin, 72584 Hülben (DE); Müller, Bernhard, Dr., 71083 Herrenberg (DE); Hofgärtner, Gerhard, 72622 Nürtingen (DE)
(74) Vertreter: Ruckh, Rainer Gerhard

(56) Entgegenhaltungen:
- EP-A1- 0 559 120
- EP-A2- 1 111 332
- DE-A1- 10 138 609
- DE-A1- 19 917 487
- US-A- 5 627 635
- US-A1- 2005 094 006

## Beschreibung

Die Erfindung betrifft eine optoelektronische Vorrichtung und ein Verfahren zu deren Betrieb.

Eine optoelektronische Vorrichtung der in Rede stehenden Art bildet einen nach dem Triangulationsprinzip arbeitenden optischen Sensor. Ein derartiger optischer Sensor ist aus der DE 199 07 547 A1 bekannt.

Die dort beschriebene optoelektronische Vorrichtung dient zum Erfassen von Objekten in einem Überwachungsbereich und umfasst einen Sendelichtstrahlen emittierenden Sender und ein Empfangslichtstrahlen empfangenden Empfangselement, welches ein Nahelement und ein Fernelement aufweist, wobei die vom Objekt reflektierten Empfangslichtstrahlen mit zunehmendem Objektabstand zunächst auf das Nahelement und dann auf das Fernelement treffen. In einer Auswerteeinheit wird in Abhängigkeit der Empfangssignale an den Ausgängen des Nah- und Fernelements ein binäres Schaltsignal generiert. Das Empfangselement weist mehrere Segmente auf, wobei eine vorgebbare Anzahl dieser Segmente zum Nahelement und die übrigen Segmente zum Fernelement verknüpfbar sind.

Die Größen der Segmente können an die entfernungsabhängige Breite des Empfangslichtflecks angepasst sein, so dass unabhängig von der Objektdistanz mit den von einem Objekt zurückreflektierten Empfangslichtstrahlen immer etwa dieselbe Anzahl von Segmenten beleuchtet wird.

Nachteilig hierbei ist jedoch, dass die Ortsauflösung der Distanzmessung durch die Größen der Segmente begrenzt ist. Demzufolge ist die Genauigkeit der Distanzmessung beschränkt.

Der Erfindung liegt die Aufgabe zugrunde, eine optoelektronische Vorrichtung der eingangs genannten Art bereitzustellen, mittels der eine hohe Distanzauflösung beziehungsweise Einstellauflösung erzielt werden kann.

Zur Lösung dieser Aufgabe sind die Merkmale der Ansprüche 1 und 15 vorgesehen. Vorteilhafte Ausführungsformen und zweckmäßige Weiterbildungen der Erfindung sind in den Unteransprüchen beschrieben.

Das erfindungsgemäße Verfahren dient zum Betrieb einer optoelektronischen Vorrichtung mit einem Sendelichtstrahlen emittierenden Sender und einem Empfangslichtstrahlen empfangenden, aus einer Anordnung von Empfangselementen bestehenden Empfänger. Der Auftreffpunkt der von einem Objekt als Empfangslichtstrahlen zurückreflektierten Sendelichtstrahlen auf den Empfangselementen des Empfängers stellt ein Maß für die Objektdistanz dar. Während eines Einlernvorgangs erfolgt eine subpixelgenaue Einteilung der Empfangselemente im Bereich und während eines auf den Einlernvorgangs folgenden Messbetriebs wird ein Objektfeststellungssignal generiert, dessen Schaltzustände abhängig davon sind, in welchem der Bereich die Empfangslichtstrahlen auftreffen.

Der Grundgedanke der Erfindung besteht darin, mit einer Subpixelauflösung die Genauigkeit der Objektdetektion, insbesondere der Distanzmessung zu erhöhen. Durch die erfindungsgemäße Subpixelauflösung ist die Distanz- oder Einstellauflösung nicht mehr auf die Größen der Empfangselemente des Empfängers begrenzt.

Die erfindungsgemäße Lösung ermittelt in einem Einlernvorgang mindestens einen Referenzwert, der ein Maß für die subpixelgenaue Position des Teachobjektes ist. Im Messbetrieb wird entsprechend verfahren und die gemessenen mit den geteachten Referenzwerten verglichen und daraus ein Schaltsignal generiert.

Durch das erfindungsgemäße Verfahren ist die Distanzauflösung der optoelektronischen Vorrichtung nicht mehr durch die Breite der Empfangselemente des Empfängers begrenzt, sondern kann subpixelgenau erfolgen.

Weiterhin ist vorteilhaft, dass das Objektfeststellungssignal, insbesondere das Schaltsignal sehr schnell, nur durch einfachen Vergleich mit Referenzwerten generiert werden kann.

Das erfindungsgemäße Verfahren beruht generell auf dem Prinzip, die Empfangselemente in unterschiedliche Bereiche einzuteilen, wobei diese Bereiche vorgegebenen Distanzbereichen, in welchen Objekten angeordnet sein können, entsprechen.

Die Grenzen zwischen derartigen Bereichen, insbesondere die Grenze zwischen einem Nahbereich und Fembereich bei Einteilung der Empfangselemente in zwei Bereiche, werden vorteilhaft dadurch definiert, dass ein in einer Tastweite angeordnetes Objekt detektiert wird, wobei die der Tastweite entsprechende Distanz des Objekts zur optoelektronischen Vorrichtung gerade die Grenze zwischen zwei Bereichen, insbesondere dem Nahbereich und Fembereich des Empfängers der optoelektronischen Vorrichtung definiert.

Da der Empfänger aus einer diskreten Anordnung von Empfangselementen mit endlichen Breiten besteht, kann durch eine bloße Aufteilung der Empfangselemente in zwei Bereiche, insbesondere in einen Nahbereich und Fernbereich, die durch die Tastweite des Objekts vorgegebene Bereichsgrenze nicht genau getroffen werden.

Bei dem erfindungsgemäßen Verfahren wird daher in einem Einlemvorgang, in welchem ein Objekt in einer Tastweite detektiert wird, in einem ersten Schritt eine Aufteilung der Empfangselemente in zwei Bereiche, insbesondere in einen Nahbereich und Fembereich vorgenommen, so dass die dadurch erhaltene Bereichsgrenze der der Tastweite tatsächlich entsprechenden Bereichsgrenze am nächsten kommt.

Vorzugsweise wird hierzu die Differenz des Nahbereichssignals und Fernbereichssignals gebildet, und die Einleitung in den Empfangselementen in den Nahbereich und Fernbereich so vorgenommen, dass diese Differenz minimal ist. Ausgehend von dieser Einteilung werden dann Referenzwerte definiert, die ein subpixelgenaues Maß für die exakte der Tastweite entsprechenden Bereichsgrenze bilden. Dies bedeutet, dass so eine Feinkorrektur der Grobeinteilung des Nahbereichs und Fembereichs, der durch die Zusammenschaltung der Empfangselemente zu dessen Bereichen definiert ist, erfolgt.

Durch die Übernahme der im Einlernvorgang vorgenommenen Einteilung der Empfangselemente in den Nahbereich und Fernbereich in den nachfolgenden Messbetrieb sowie die Referenzierung der im Messbetrieb abgeleiteten Referenzwerte werden die Messwerte auf eine subpixelgenau definierte Tastweite bezogen, so dass mit der optoelektronischen Vorrichtung eine hohe Nachweisempfindlichkeit erzielt wird.

Der Einlernvorgang des erfindungsgemäßen Verfahrens kann vorteilhaft dahingehen erweitert sein, dass zwei verschiedene Aufteilungen der Empfangselemente in den Nahbereich und Fernbereich derart vorgenommen werden, dass das ein Grenzeelement bildendes Empfangselement, auf welches bei Detektion des Objekts in der Tastweite die größte Empfangslichtmenge auftrifft, einmal dem Nahbereich und einmal dem Fernbereich zugerechnet wird.

In diesem Fall werden ausgehend von diesen beiden Aufteilungen Referenzwerte definiert, die ein Maß für die durch die Tastweite vorgegebene subpixelgenaue Position der Grenze zwischen Nahbereich und Fernbereich definieren.

Auch in diesem Fall werden im auf den Einlernvorgang folgenden Messbetrieb die beiden Aufteilungen der Empfangselemente in den Nahbereich und Fembereich beibehalten und durch Referenzierung der aktuellen Messwerte auf die Referenzwerte das Schaltsignal generiert. Subpixelgenaue Einteilungen der Empfangsbereiche sind aus EP 055 9120, US 5627635 oder US 2005 094006 bekannt. Einteilungen von Empfangsbereichen durch Einlernvorgänge sind aus DE 102 31178 oder DE 10061649 bekannt.

Die Erfindung wird im Nachstehenden anhand der Zeichnungen erläutert. Es zeigen
- Figur 1:: Blockschaltbild eines Ausführungsbeispiels der optoelektronischen Vorrichtung.
- Figur 2:: Variante der optoelektronischen Vorrichtung gemäß Figur 1 für ein erstes Auswerteverfahren mit einer ersten Bereichszuordnung der Empfangselemente des Empfängers für einen ersten Messvorgang.
- Figur 3:: Diagramm der distanzabhängigen Differenzspannung für die Anordnung gemäß Figur 2.
- Figur 4:: Zweite Bereichszuordnung der Empfangselemente des Empfängers der optoelektronischen Vorrichtung gemäß Figur 2 für einen zweiten Messvorgang.
- Figur 5:: Diagramm der distanzabhängigen Differenzspannung für die Anordnung gemäß Figur 4.

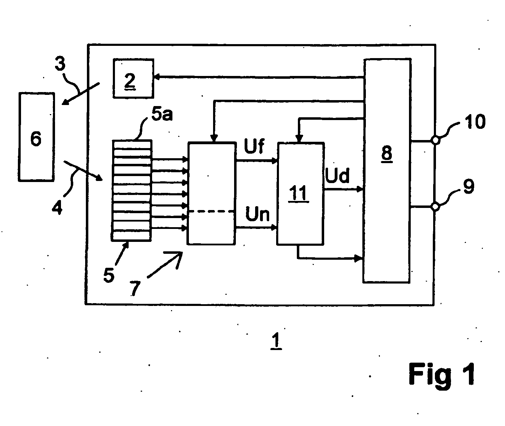

Figur 1 zeigt ein Ausführungsbeispiel einer optoelektronischen Vorrichtung 1 zur Objekterfassung in einem Überwachungsbereich.

Die optoelektronische Vorrichtung 1 weist einen Sender 2 in Form einer Leuchtdiode auf. Der Sender 2 emittiert Sendelichtstrahlen 3, die in einem Überwachungsbereich zur Objekterfassung geführt werden. Aus dem Überwachungsbereich zurückreflektierte Empfangslichtstrahlen 4 treffen auf einen Empfänger 5, der aus einer zellenförmigen Anordnung von Empfangselementen 5a besteht. Der Sender 2 und der Empfänger 5 liegen in Abstand zueinander. Die so ausgebildete optoelektronische Vorrichtung 1 bildet einen nach dem Triangulationsprinzip arbeitenden Sensor. Die von einem Objekt 6 zurückreflektierten Empfangslichtstrahlen 4 werden auf den Empfänger 5 geführt, wobei der Auftreffpunkt der Empfangslichtstrahlen 4 auf dem Empfänger 5 ein Maß für die Objektdistanz darstellt.

Durch ein Schaltnetzwerk 7 werden die Empfangselemente 5a zu unterschiedlichen Bereichen zusammengeschaltet. Da die optoelektronische Vorrichtung 1 nach dem Triangulationsprinzip arbeitet und der Auftreffpunkt der Empfangslichtstrahlen 4 auf dem Empfänger 5 ein Maß für die Objektdistanz darstellt, entsprechen die einzelnen Bereiche der Empfangselemente 5a bestimmten Distanzbereichen innerhalb des Überwachungsbereichs. Im vorliegenden Fall werden erste Empfangselemente 5a des Empfängers 5 zu einem Nahbereich und zweite, vorzugsweise die restlichen Empfangselemente 5a zu einem Fembereich zusammengeschaltet. Hierzu wird das Schaltnetzwerk 7 von einer Auswerteinheit 8 angesteuert. Weiterhin dient die Auswerteeinheit 8 zur Ansteuerung des Senders 2.

Mittels der optoelektronischen Vorrichtung 1 wird als Objektfeststellungssignal ein binäres Schaltsignal generiert, dessen Schaltzustände angeben, ob sich ein Objekt 6 in einem bestimmten Distanzbereich innerhalb des Überwachungsbereichs befindet oder nicht. Das Schaltsignal wird über einen Schaltausgang 9 ausgegeben. Zur Eingabe von Parameterwerten ist eine Parametrierschnittstelle 10 vorgesehen.

In dem Schaltnetzwerk 7 wird aus den Summen der Ausgangssignale der Empfangselemente 5a des Nahbereichs ein Nahbereichssignal Uₙ generiert. Weiterhin wird in dem Schaltnetzwerk 7 aus den Summen der Ausgangssignale der Empfangselemente 5a des Fernbereichs ein Fernbereichssignal U_{f} generiert. Das Nahbereichssignal Uₙ und das Fernbereichssignal U_{f} werden in eine Signalverarbeitungseinheit 11 eingegeben. Dort erfolgt eine Aufbereitung dieser Signale sowie die Bildung der Differenz U_{d} = Uₙ - U_{f}. Diese Differenz, gegebenenfalls zusammen mit dem Summensignal Uₛ = Uₙ + U_{f}, wird an die Auswerteeinheit zur Generierung des Schaltsignals ausgegeben.

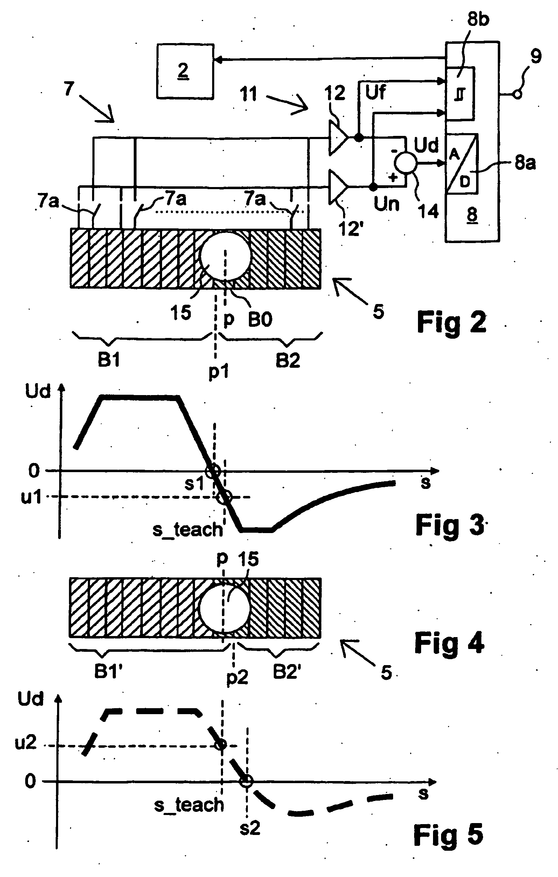

Figur 2 zeigt eine optoelektronische Vorrichtung 1 gemäß Figur 1 mit einer ersten Ausführungsvariante des Schaltnetzwerks 7. Das Schaltnetzwerk 7 umfasst eine Anordnung von der einzelnen Empfangselementen nachgeordneten Schaltern 7a. Je nach Schalterstellung werden die Ausgangssignale der Empfangselemente 5a auf eine erste Leitung geschaltet und zu einem Verstärker 12 geführt, wodurch diese zum Fernbereichssignal U_{f} addiert werden, oder die Ausgangssignale der Empfangselemente 5a werden auf eine zweite Leitung geschaltet und zu einem Verstärker 12' geführt, wodurch diese zum Nahbereichssignal Uₙ addiert werden. Die Verstärker 12, 12' bilden mit einem Subtrahierglied 14, in welchem das Differenzsignal U_{d} aus dem Nahbereichssignal und Fernbereichssignal gebildet wird, die Signalverarbeitungseinheit 11. Das Differenzsignal wird über einen Analog-Digital-Wandler 8a in die Auswerteeinheit 8 eingelesen. Weiterhin werden das Nahbereichssignal Uₙ und das Fernbereichssignal U_{f} über Komparatoren 8b in die Auswerteeinheit 8 eingelesen, wodurch die Signale U_{f}, Uₙ auf Übersteuerung kontrolliert werden.

Während eines Einlernvorgangs wird ein in einer Tastweite zur optoelektronischen Vorrichtung 1 angeordnetes Objekt 6 detektiert. Anhand der dabei registrierten Ausgangssignale der Empfangselemente 5a erfolgt die in Figur 2 dargestellte erste Einteilung der Empfangselemente 5a in einen Nahbereich B1 und einen Fembereich B2.

In Figur 2 ist mit p die subpixelgenaue Position des Schwerpunkts des Empfangslichtflecks 15 auf dem Empfänger 5 dargestellt. Wie aus Figur 2 weiter ersichtlich, wird das Empfangselement 5a B0, auf welchem der Schwerpunkt des Empfangslichtflecks 15 liegt, dem Bereich B2 zugeordnet.

Figur 4 zeigt nochmals den Empfänger 5 der Anordnung gemäß Figur 2 bei der Detektion des Objekts 6 in der Tastweite. Im Unterschied zum Fall gemäß Finur 2 erfolgt nun die Bereichseinleitung der Empfangselemente 5a derart, dass das Empfangselement 5a B0 dem Nahbereich B1' zugeordnet ist. Der Fernbereich B2' ist damit gegenüber der Einteilung gemäß Figur 2 um das Element B0 reduziert.

Zur Ermittlung der Einteilungen gemäß Figuren 2 und 4 wird vom Fembereich B2 kommend die Stellung des Schaltnetzwerks 7 so lange verschoben, bis die Differenzspannung U_{d} gerade das Vorzeichen von plus nach minus wechselt. Die aktuelle Stellung des Schaltnetzwerks 7 markiert dann die Trennstelle p1 in Figur 2, die vorangegangene Stellung des Schaltnetzwerks 7 markiert die Trennstelle p2 zwischen den Bereichen B1' und B2'.

Mit diesen beiden Einteilungen der Empfangselemente 5a in Nah- und Fernbereiche wird die in den Figuren 3 und 5 gezeigte Distanzabhängigkeit der Differenzspannung U_{d} erhalten.

Bei der Einteilung der Empfangselemente 5a in die Bereiche B1, B2 wird bei der Detektion des in der Tastweite angeordneten Objekts 6 der Spannungswert U₁ für die Differenz U_{d} erhalten (Figur 3).

Bei der Einteilung der Empfangselemente 5a in die Bereiche B1', B2' wird bei der Detektion des in der Tastweite angeordneten Objekts 6 der Spannungswert U₂ für die Differenz U_{d} erhalten.

Der Quotient U₁/U₂ stellt ein Maß für die subpixelgenaue Lage des Empfangslichtflecks 15 auf dem Empfänger 5 und damit für die Tastweite des im Einlernvorgang detektierten Objekts 6 dar. Dieser Quotient wird in der Auswerteeinheit 8 als Referenzwert abgespeichert.

Während des auf den Einlernvorgang folgenden Messebetriebs werden zur Objektdetektion innerhalb des zu großen Distanzen hin durch die Tastweite begrenzten Distanzbereichs jeweils zwei Messungen mit den Bereichseinteilungen der Empfangselemente 5a gemäß den Figuren 2 und 4 durchgeführt und dabei bei Bedarf der Quotient der Differenzspannungen U_{d1}, U_{d2} gebildet, die für die beiden Einteilungen erhalten werden, wobei dieser Quotient mit dem Referenzwert verglichen wird.

Im Messbetrieb können dabei grundsätzlich folgende Fälle unterschieden werden:
a) Messung mit der Trennstelle p1 nach Figur 2: u1 hat positives Potential, es kann direkt auf erkanntes Objekt geschlossen werden und die Messung mit der Trennstelle p2 kann entfallen.
b) Messung mit der Trennstelle p2 nach Figur 4: u2 hat negatives Potential, es kann direkt auf freie Strecke, bzw. Hintergrund geschlossen werden und die Messung mit der Trennstelle p1 kann entfallen.
c) Fall a) und b) treffen nicht zu: die Division von u2/ul wird durchgeführt und mit dem gespeicherten Quotienten aus der Referenzmessung verglichen.

Da der Fall c) nur dann auftritt, wenn die aktuelle Objektdistanz nahe an der Tastweite liegt, ist die Division nur selten durchzuführen und der Schaltausgang 9 kann in der Regel bereits nach einer, maximal nach zwei Messungen gesetzt werden. Mit diesem Verfahren wird eine Subpixelauflösung bei der Distanzbestimmung beziehungsweise Objektdetektion erhalten.

**Bezugszeichenliste**

| | |
|---|---|
| (1) | Optoelektronische Vorrichtung |
| (2) | Sender |
| (3) | Sendelichtstrahlen |
| (4) | Empfangslichtstrahlen |
| (5) | Empfänger |
| (5a) | Empfangselement |
| (6) | Objekt |
| (7) | Schaltnetzwerk |
| (7a) | Schalter |
| (8) | Auswerteeinheit |
| (8a) | Analog-Digital-Wandler |
| (8b) | Komparatoren |
| (8c) | Komparator |
| (8d) | Komparator |
| (8e) | Komparator |
| (9) | Schaltausgang |
| (10) | Parametrierschnittstelle |
| (11) | Signalverarbeitungseinheit |
| (12) | Verstärker |
| (13) | Summierglied |
| (14) | Subtrahierglied |
| (15) | Empfangslichtfleck |

## Patentansprüche

1. Verfahren zum Betrieb einer optoelektronischen Vorrichtung (1) mit einem Sendelichtstrahlen (3) emittierenden Sender (2) und einem Empfangslichtstrahlen (4) empfangenden, aus einer Anordnung von Empfangselementen (5a) bestehenden Empfänger (5), wobei der Auftreffpunkt der von einem Objekt (6) als Empfangslichtstrahlen (4) zurückreflektierten Sendelichtstrahlen (3) auf den Empfangselementen (5a) des Empfängers (5) ein Maß für die Objektdistanz darstellt, **dadurch gekennzeichnet, dass** die optoelektronische Vorrichtung (1) ein Schaltneztwerk (7) aufweist, mit welchem jeweils aus den Summen der Ausgangssignale der Empfangselemente (5a) eines Bereichs ein Bereichssignal generiert wird, dass während eines Einlemvorgangs eine Einteilung der Empfangselemente (5a) in Bereiche dadurch erfolgt, dass ein in einer Tastweite angeordnetes Objekt (6) detektiert wird, wobei die Tastweite die Grenze zwischen Nahbereich und Fernbereich definiert, dass während des Einlernvorgangs zwei Aufteilungen der Empfangselemente (5a) in einen Nahbereich und einen Fernbereich vorgenommen werden, in dem ein ein Grenzelement bildendes Empfangselement (5a) einmal dem Nahbereich und einmal dem Fernbereich zugeordnet wird, wobei zur Ermittlung der Einteilungen vom Fernbereich kommend die Stellung des Schaltnetzwerks (7) so lange verschoben wird bis die Differenzspannung U*_{d}* des Nah- und Fernbereichssignals gerade das Vorzeichen von plus nach minus wechselt, wobei die aktuelle Stellung des Schaltnetzwerks (7) eine Trennstelle(P1) zwischen einem Nahbereich (B1) und einem Fernbereich (B2) einer ersten Bereichszuordnung der Empfangselemente (5a) markiert und die vorangegangene Stellung des Schalternetzwerks (7) eine Trennstelle (P2) zwischen einem Nahbereich (B1) und dem Fernbereich (B2) einer zweiten Bereichszuordnung der Empfangselemente (5a) markiert, wobei bei der Einteilung der Empfangselemente (5a) in den Nahbereich (B1) und den Fernbereich (B2) der ersten Bereichszuordnung der Empfangselemente (5a) bei der Detektion des in der Tastweite angeordneten Objekts (6) der Spannungswert U*₁* für die Differenzspannung U*_{d}* erhalten wird und wobei bei der Einteilung der Empfangselemente (5a) in an den Nahbereich (B1') und den Fernbereich (B2') der zweiten Bereichszuordnung der Empfangselemente (5a) B2' bei der Detektion des in der Tastweite angeordneten Objekts (6) der Spannungswert U*₂* für die Differenzspannung U*_{d}* erhalten wird, dass ausgehend von den Aufteilungen der Empfangselemente (5a) in den ersten Nahbereich und Fernbereich und in den zweiten Nahbereich und Fernbereich Referenzwerte definiert werden, welche von den Quotienten U*₁* / *U₂* gebildet sind, die ein Maß für die durch die Tastweite vorgegebene Subpixelposition der Grenze zwischen Nahbereich und Fernbereich definieren, und dass während eines auf den Einlemvorgang folgenden Messbetriebs ein Objektfeststellungssignal in Form eines binären Schaltsignals generiert wird, wobei zur Generierung des Objektfeststellungssignals Verhältnisse der Bereichssignale gebildet werden und dessen Schaltzustände abhängig davon sind, in welchem der Bereiche die Empfangslichtstrahlen (4) auftreffen.

## Claims

1. Method of operating an optoelectronic device (1) comprising a transmitter (2) emitting transmitted light beams (3) and a receiver (5) receiving received light beams (4) and consisting of an arrangement of receiving elements (5a), wherein the point of incidence of the transmitted light beams (3), which are reflected back by an object (6) as received light beams (4), on the receiving elements (5a) of the receiver (5) represents a measure for the object distance, **characterised in that** the optoelectronic device (1) comprises a switching network (7) by which a region signal is generated each time from the sums of the output signals of the receiving elements (5a) of a region, that during a learning process a division of the receiving elements (5a) into regions is carried out in the manner that an object (6) disposed in a scanning range is detected, wherein the scanning range defines the boundary between near region and far region, that during the learning process two divisions of the receiving elements (5a) into a near region and a far region are undertaken **in that** a receiving element (5a) forming a boundary element is assigned once to the near region and once to the far region, wherein for determining the divisions coming from the far region the setting of the switching network (7) is displaced until the difference voltage U_{d} of the near region signal and far region signal just change the sign from plus to minus, wherein the current setting of the switching network (7) marks a separating point (P1) between a near region (B1) and a far region (B2) of a first region association of the receiving elements (5a) and the preceding setting of the switching network (7) marks a separating point (P2) between a near region (B1') and the far region (B2') of a second region association of the receiving elements (5a), wherein in the division of the receiving elements (5a) into the near region (B1) and the far region (B2) of the first region association of the receiving elements (5a) the voltage value U₁ for the difference voltage U_{d} is obtained when the object (6) located in the scanning range is detected and wherein in the division of the receiving elements (5a) into the near region (B1') and the far region (B2') of the second region association of the receiving elements (5a) the voltage value U₂ for the different voltage U_{d} is obtained when the object (6) located in the scanning range is detected, that proceeding from the divisions of the receiving elements (5a) into the first near region and far region and into the second near region and far region reference values are defined which are formed by the quotient U₁/U₂ and which define a measure for the sub-pixel position, which is predetermined by the scanning range, of the boundary between near region and far region and that during a measuring operation following the learning process an object detection signal in the form of a binary switching signal is generated, wherein for generating the object detection signal ratios of the region signals are formed and the switching states of which are dependent on the regions in which the received light beams (4) are incident.

## Revendications

1. Procédé de fonctionnement d'un dispositif optoélectronique (1) comprenant un émetteur (2) émettant des rayons lumineux d'émission (3) et un récepteur (5) composé d'éléments de réception (5a) et recevant des rayons lumineux de réception (4), le point d'impact des rayons lumineux d'émission (3) réfléchis par un objet (6) sous forme de rayons lumineux de réception (4) sur les éléments de réception (5a) du récepteur (5) constituant une mesure de la distance de l'objet, **caractérisé en ce que** le dispositif optoélectronique (1) présente un réseau de commutation (7) avec lequel un signal de zone est généré à partir des sommes des signaux de sortie des éléments de réception (5a) d'une zone, **en ce que**, pendant un processus d'apprentissage, il est effectué une division des éléments de réception (5a) en zones de telle manière qu'un objet (6) disposé à une distance de détection est détecté, la distance de détection définissant la limite entre zone proche et zone distante, que pendant le processus d'apprentissage, il est effectué deux divisions des éléments de réception (5a) en une zone proche et une zone distante en affectant un élément de réception (5a) formant un élément limite une fois à la zone proche et une fois à la zone distante, la position du réseau de commutation (7), pour la détermination des divisions de la zone distante, est différée jusqu'à ce que la tension différentielle U_{d} du signal de zone proche et distante change tout juste de plus en moins, la position courante du réseau de commutation (7) marquant un endroit de séparation (P1) entre une zone proche (B1) et une zone distante (B2) d'une première répartition des zones des éléments de réception (5a), et la position précédente du réseau de commutation (7) marquant un endroit de séparation (P2) entre une zone proche (B1') et une zone distante (B2') d'une seconde répartition des zones des éléments de réception (5a), la valeur de tension U₁ étant obtenue pour la tension différentielle U_{d} lors de la division des éléments de réception (5a) en la zone proche (B1) et la zone distante (B2) de la première répartition de zones des éléments de réception (5a) lors de la détection de l'objet (6) disposé en deçà de la distance de détection et la valeur de tension U₂ étant obtenue pour la tension différentielle U_{d} lors de la division des éléments de réception (5a) en la zone proche (B1') et la zone distante (B2'/) de la seconde répartition de zones des éléments de réception (5a) lors de la détection de l'objet (6) disposé en deçà de la distance de détection et qu'à partir des divisions des éléments de réception (5a) en la première zone proche et zone distante et en la deuxième zone proche et zone distante sont définies des valeurs de référence qui sont constitués par les quotients U₁/U₂ et qui définissent une mesure de la position en sous-pixels prédéfinie par la distance de détection de la limite entre zone proche et zone distante, et que pendant une opération de mesure succédant au processus d'apprentissage, il est généré un signal de détection d'objet sous la forme d'un signal de commutation binaire, des rapports des signaux de zone étant formés pour la génération du signal de détection d'objet dont les états de commutation dépendent de la zone que les rayons lumineux de réception (4) atteignent.
